(19) Europäisches Patentamt
European Patent Office
Office européen des brevets

(11) **EP 4 458 576 A1**

(12) **EUROPEAN PATENT APPLICATION**
published in accordance with Art. 153(4) EPC

(43) Date of publication:
**06.11.2024 Bulletin 2024/45**

(21) Application number: **22915817.5**

(22) Date of filing: **20.12.2022**

(51) International Patent Classification (IPC):
***B32B 27/00*** (2006.01)    ***B32B 27/18*** (2006.01)
***B32B 27/36*** (2006.01)    ***B65D 65/40*** (2006.01)

(52) Cooperative Patent Classification (CPC):
**B32B 27/00; B32B 27/18; B32B 27/36; B65D 65/40**

(86) International application number:
**PCT/JP2022/046836**

(87) International publication number:
**WO 2023/127593 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2021 JP 2021214640**

(71) Applicant: **TOYOBO CO., LTD.**
**Osaka-shi, Osaka 530-0001 (JP)**

(72) Inventors:
• **TAMARI, Noboru**
  **Inuyama-shi, Aichi 484-8508 (JP)**
• **HARUTA, Masayuki**
  **Inuyama-shi, Aichi 484-8508 (JP)**

(74) Representative: **Vossius & Partner**
**Patentanwälte Rechtsanwälte mbB**
**Siebertstrasse 3**
**81675 München (DE)**

(54) **MULTILAYER FILM, LID MATERIAL FOR FOOD PACKAGING CONTAINER, AND FOOD PACKAGING CONTAINER**

(57)    [Problem] The purpose of the present invention is to provide a multilayer film having suitable antifogging properties, ease of opening, impact resistance, and blocking resistance. [Solution] A multilayer film comprising at least two layers being a base layer and an antifogging layer, wherein (a) the heat seal strength at each of the temperatures 120°C, 140°C, 160°C, and 180°C is 2.0-12.0 N/15 mm, (b) the water contact angle under conditions in which the temperature is 5°C and the relative humidity is 50% is 50° or smaller, (c) the peel strength of the antifogging layer surface and the substrate layer surface of the multilayer film is 1 N/15 mm or smaller, (d) the impact strength under conditions in which the temperature is 5°C is 0.5 J or larger, (e) the tearing strength under conditions in which the temperature is 5°C is 100 mN or larger in both the MD direction and the TD direction of the multilayer film, and (f) the thickness of the antifogging layer is 0.3 μm or larger and smaller than 3.0 μm.

[Fig. 2]

Preheating zone | Elongation 1 zone | Elongation 2 zone | Heat fixation zone

EP 4 458 576 A1

**Description**

TECHNICAL FIELD

The present invention relates to a multilayer film having both easy-opening property and antifogging property. More specifically, the present invention relates to a multilayer film that is used by being heat-bonded to a packaging container. In particular, the present invention relates to a multilayer film for a lid member for a food packaging container.

BACKGROUND ART

As a material for packaging greengrocery such as vegetables, a container obtained by shaping a plastic film or a sheet has been used. Containers made of polyester-based materials including polyester terephthalate are widely used in consideration of not only their beautiful appearance such as transparency and glossiness but also the fact that such polyester-based materials are recyclable materials. When such a polyester-based container is used, a so-called fitting lid, that is used in a fitted manner, has been conventionally used as a lid member. However, due to demerits such as risks that: the lid comes off due to external stress, thereby causing the contents to be scattered; and the lid is opened during display of a commodity, resulting in contamination by foreign matter, it has been promoted, in recent years, to make a lid member into a top-seal film. Main examples of properties required for top-sealing include antifogging property, easy-opening property, impact resistance, and blocking resistance. Antifogging property is a function of preventing, when the contents are greengrocery such as a salad, for example, the contents from becoming difficult to be viewed because of fogging of the lid member during storage or display of the commodity caused by water vapor emitted from the contents. Easy-opening property is a function indicating whether a container, at the time of opening thereof, can be easily and neatly opened without breakage of the lid member. Impact resistance is an index that indicates whether or not there is damage to the lid member due to impact from outside during transportation of the commodity or due to the weight when commodities are stacked during display thereof, for example. As for blocking resistance, since a heat sealing layer is provided to a top-seal member, in a case where a top-seal film is stored in the form of a roll, blocking is caused. Blocking resistance is a function of preventing this blocking from influencing operability.

Patent Literature 1 indicates that an adhesive composition containing an antifogging agent C and a polyester resin A having a glass transition temperature of -30 to 30°C is suitably used in attaching a food packaging container and a lid member film. Since heat sealing strength and antifogging property are good and a biaxially oriented polyester film is used as the lid member, impact resistance is also anticipated to be good. However, the biaxially oriented polyester film used as the lid member is a general biaxially stretched film, and has a tendency that tear strength thereof decreases due to the production method thereof. Therefore, it is anticipated that, if fracture due to peeling caused between the container and the lid member film at the time of opening of the container has propagated to the lid member film, the lid member film easily tears, and easy-opening property is not exhibited.

Patent Literature 2 indicates that a lid member formed from a polyester-based component and having a sealing layer and a base layer exhibits good heat sealability and antifogging property with respect to a container. Since antifogging property is good and the film is a biaxially oriented polyester film, impact resistance is also anticipated to be good. Meanwhile, heat sealing strength is very large, and it is anticipated that easy peeling at the time of opening of the container is difficult. Even in an example in which heat sealing strength is small, if heat sealing temperature is changed, the strength is highly likely to change to a large extent, and thus, it is anticipated that keeping a desired heat sealing strength is difficult in an actual production process. In addition, since a copolymerized polyester resin is used in the sealing layer, thickness unevenness of the obtained biaxially oriented polyester film is anticipated to be large. In a case where the thickness unevenness is large, when the film is stored as a roll, blocking of the sealing layer is caused, which causes a large influence on operability.

Patent Literature 3 indicates that a multilayer film including: a biaxially oriented polyester film used as a base layer; and a polyester resin layer offline-coated as a heat sealable outer layer exhibits good heat sealability with respect to a food tray. Although heat sealing strength and antifogging property are good, the biaxially oriented polyester film used as the base layer is a general biaxially stretched film. Therefore, it is anticipated that the base layer tears at the time of opening of the container, and easy-opening property is not exhibited. In addition, since the polyester resin used in the heat sealing outer layer has a Tg of 0 to 30°C and is a single resin, blocking resistance is anticipated to be poor.

CITATION LIST

PATENT LITERATURE

PATENT LITERATURE 1: WO 2008/179689 A
PATENT LITERATURE 2: JP 2018-114992 A
PATENT LITERATURE 3: JP 2017-209996 A

## SUMMARY OF INVENTION

### TECHNICAL PROBLEM

An object of the present invention is to provide a multilayer film in which antifogging property, easy-opening property, impact resistance, and blocking resistance are all good. Further, a lid member (also referred to as a top-seal member), for a food packaging container, using the multilayer film is provided.

### SOLUTION TO PROBLEM

The present invention includes the configuration of item 1 below.

(Item 1)

A multilayer film comprising at least two layers being a base layer and an antifogging layer, wherein

(a) a heat sealing strength measured by using a test piece having a width of 15 mm when heat sealing of an antifogging layer face of the multilayer film and an unstretched polyethylene terephthalate sheet having a thickness of 200 $\mu$m is performed at 0.2 MPa for one second at each of temperatures of 120°C, 140°C, 160°C, and 180°C, is 2.0 N/15 mm or larger and 12.0 N/15 mm or smaller,
(b) a water contact angle measured after five seconds from dropping of 1 $\mu$L of distilled water onto a surface of the antifogging layer of the multilayer film under a condition of 5°C and 50%R.H. is 50° or smaller,
(c) a peel strength measured by using a test piece having a width of 15 mm after an antifogging layer face of the multilayer film and a base layer face of the multilayer film are stacked with each other and then left to stand for one week under a condition of 40°C under a load of 450 kgf/m$^2$, is 1 N/15 mm or smaller,
(d) an impact strength under a condition of 5°C in a pendulum impact test is 0.5 J or larger,
(e) a tear strength under a condition of 5°C is 100 mN or larger in each of an MD direction and a TD direction of the multilayer film, and
(f) a thickness of the antifogging layer is 0.3 $\mu$m or larger and smaller than 3.0 $\mu$m.

According to item 1, the heat sealing strength when heat sealing is performed at each of temperatures of 120°C, 140°C, 160°C, and 180°C is 2.0 N/15 mm or larger and 12.0 N/15 mm or smaller. Therefore, a necessary heat sealing strength between a container and the lid member is realized, and at the time of opening of the lid member, the lid member can be opened easily and without causing breakage of the lid member. According to item 1, the water contact angle measured after five seconds from dropping of 1 $\mu$L of distilled water onto the surface of the antifogging layer of the multilayer film is 50° or smaller, and thus, the multilayer film has excellent antifogging property. According to item 1, the peel strength measured when the antifogging layer face of the multilayer film and the base layer face of the multilayer film are stacked with each other is 1 N/15 mm or smaller, and thus, blocking between films can be prevented. According to item 1, the impact strength under a condition of 5°C is 0.5 J or larger. Therefore, the multilayer film is strong against impact from outside, and is effective in prevention of damage to the lid member. According to item 1, the tear strength under a condition of 5°C is 100 mN or larger in each of the MD direction and the TD direction of the multilayer film, and the multilayer film has easy-opening property. That is, at the time of opening of a container, it is possible to suppress breakage of the lid member due to propagation, in the multilayer film, of fracture caused by peeling occurring between the container and the lid member. According to item 1, the thickness of the antifogging layer is 0.3 $\mu$m or larger and smaller than 3.0 $\mu$m, and both heat sealability and blocking resistance can be realized.

Preferably, the present invention has the configurations of item 2 below and thereafter.

(Item 2)

The multilayer film according to item 1, wherein a strength ratio (tear strength$_{MD}$/tear strength$_{TD}$) of a tear strength in the MD direction of the multilayer film to a tear strength in the TD direction of the multilayer film, each tear strength being measured under a condition of 5°C, is 0.6 to 1.5.

According to item 2, since the orientations in the MD direction and the TD direction of the multilayer film are made isotropic, the multilayer film has easy-opening property irrespective of the opening direction of the lid member.

(Item 3)

The multilayer film according to item 1 or 2, wherein
an orientation coefficient of the multilayer film obtained according to a calculation formula of Formula (1) by using an Abbe refractometer is 0.6 to 1.5.

$$\text{Formula (1)} \quad \text{Orientation coefficient} = \{Nx-(Ny+Nz)/2\}/\{Ny-(Nx+Nz)/2\}$$

Nx: refractive index in the MD direction of the film
Ny: refractive index in the TD direction of the film
Nz: refractive index in a thickness direction of the film

According to item 3, since the orientations in the MD direction and the TD direction of the multilayer film are made isotropic, the multilayer film has easy-opening property irrespective of the opening direction of the lid member.

(Item 4)

The multilayer film according to any one of items 1 to 3, wherein the base layer is a biaxially oriented polyester film.

(Item 5)

The multilayer film according to any one of items 1 to 4, wherein the antifogging layer includes at least two types of resins being a polyester resin (A) having a glass transition temperature Tg of 0°C or higher and 40°C or lower, and a polyester resin (B) having a glass transition temperature Tg of 41°C or higher and 80°C or lower.

(Item 6)

The multilayer film according to item 5, wherein, in the resins forming the antifogging layer, a mass ratio between the polyester resin (A) and the polyester resin (B) is the polyester resin (A):the polyester resin (B) = 50/50 to 90/10.
According to item 5 and item 6, the antifogging layer includes at least two types of polyester resins having different glass transition temperatures. Therefore, heat sealability and prevention of breakage of the lid member at the time of opening of the lid member can be realized.

(Item 7)

The multilayer film according to item 5 or 6, wherein the antifogging layer includes a nonionic surfactant.

(Item 8)

The multilayer film according to item 7, wherein an HLB value of the nonionic surfactant is 3 or larger and 10 or smaller.
According to item 7 and item 8, the multilayer film of the present invention has antifogging property.

(Item 9)

The multilayer film according to any one of items 1 to 8, wherein thickness unevenness of the multilayer film is 5% or lower.

(Item 10)

The multilayer film according to any one of items 1 to 9, wherein haze of the multilayer film is lower than 10%.

(Item 11)

The multilayer film according to any one of items 1 to 10, comprising the adhesion layer, the base layer, and a print layer.
Further, the present invention provides a lid member, for a food packaging container, using the multilayer film.

(Item 12)

A lid member for a food packaging container, the lid member including the multilayer film according to any one of items 1 to 11.

Further, the present invention provides a food packaging container having the lid member using the multilayer film.

(Item 13)

A food packaging container comprising the lid member according to item 12.

ADVANTAGEOUS EFFECTS OF INVENTION

According to the present invention, a multilayer film and a lid member that are excellent in antifogging property, easy-opening property, impact resistance, and blocking resistance can be provided.

BRIEF DESCRIPTION OF DRAWINGS

[FIG. 1] FIG. 1 is a schematic diagram showing a stretch pattern having a straight shape in a TD direction in a production process of a film.
[FIG. 2] FIG. 2 is a schematic diagram showing a stretch pattern of multi-stage stretching in a TD direction in a production process of a film.
[FIG. 3] FIG. 3 is a schematic diagram showing a stretch pattern of a logarithmic pattern in a TD direction in a production process of a film.
[FIG. 4] FIG. 4 is a schematic diagram showing a shape of an A-PET container used in evaluation of easy-opening property in Examples.

DESCRIPTION OF EMBODIMENTS

[Antifogging layer]

An antifogging layer in a multilayer film of the present invention preferably contains components of at least a polyester resin (A), a polyester resin (B), and an antifogging agent (C) below. Containing the polyester resin (A) component and the polyester resin (B) component enables excellent easy-opening property, a wide sealing temperature width, and blocking resistance to be exhibited. In addition, containing the antifogging agent (C) component also enables excellent antifogging property to be exhibited. Further, the antifogging layer can also contain an anti-blocking agent (D) in order to improve blocking resistance.

Preferably, the polyester resin (A) and the polyester resin (B) are each a polyester having a chemical structure obtained through polycondensation of a carboxylic acid component composed of a divalent or higher polyvalent carboxylic acid compound and an alcohol component composed of a divalent or higher polyhydric alcohol compound. In a case of a polyester having a chemical structure obtained through polycondensation of a carboxylic acid component composed of a divalent or higher polyvalent carboxylic acid compound and an alcohol component composed of a divalent or higher polyhydric alcohol compound, it is preferable that at least one of the polyvalent carboxylic acid compound and the polyhydric alcohol compound is a copolymerized polyester resin formed from two or more types of components. Preferably, the polyvalent carboxylic acid compound and the polyhydric alcohol compound are each a copolymerized polyester resin mainly formed from a dicarboxylic acid component and a glycol component. Here, "mainly" means that, with respect to a total of 200 mol% of the entire acid component and the entire alcohol component forming the polyester resin (A) used in the present invention, the total of the dicarboxylic acid component and the glycol component accounts for 100 mol% or higher on a molar basis.

As the dicarboxylic acid, an aromatic dicarboxylic acid or an aliphatic dicarboxylic acid is preferable, and among them, an aromatic dicarboxylic acid is more preferable. When the total amount of the carboxylic acid component is defined as 100 mol%, the lower limit of the copolymerization amount of the aromatic dicarboxylic acid component is preferably 40 mol%, more preferably 45 mol%, and particularly preferably 50 mol%. When the copolymerization amount is set to 40 mol% or higher, a glass transition temperature Tg can be suppressed to be low.

Specific examples of the aromatic dicarboxylic acid include terephthalic acid, isophthalic acid, orthophthalic acid, and naphthalene dicarboxylic acid, but are not limited thereto. Specific examples of the aliphatic dicarboxylic acid include succinic acid, adipic acid, azelaic acid, sebacic acid, and dodecane dicarboxylic acid, but are not limited thereto. These dicarboxylic acids may be used individually, or two or more types of these dicarboxylic acids may be used in combination. As other polyvalent carboxylic acid components, aromatic oxycarboxylic acids such as p-oxybenzoic acid and p-(hydroxyethoxy)benzoic acid; unsaturated alicyclic dicarboxylic acids such as fumaric acid, maleic acid, itaconic acid, hexahydrophthalic acid, and tetrahydrophthalic acid; and alicyclic dicarboxylic acids such as 1,2-cyclohexane dicarboxylic acid, 1,3-cyclohexane dicarboxylic acid, and 1,4-cyclohexane dicarboxylic acid may also be used. Further, tri and tetra carboxylic acids such as trimellitic acid, trimesic acid, and pyromellitic acid, and anhydrides thereof may be contained as necessary.

As the glycol component, an aliphatic glycol is preferable. When the total amount of the glycol component is defined as 100 mol%, the lower limit of the copolymerization amount of the aliphatic glycol component is preferably 70 mol%, more preferably 75 mol%, and particularly preferably 80 mol%. When the copolymerization amount is set to be 70 mol% or higher, Tg can be suppressed to be low.

Specific examples of the aliphatic glycol include ethylene glycol, propylene glycol, 1,3-propanediol, 2,2-dimethyl-1,3-propanediol, 2-methyl-1,3-propanediol, 1,4-butanediol, 1,5-pentanediol, 1,6-hexanediol, 3-methyl-1,5-pentanediol, diethylene glycol, triethylene glycol, dipropylene glycol, polyethylene glycol, polypropylene glycol, and polytetramethylene glycol, but are not limited thereto. These glycol components may be used individually, or two or more types of these glycol components may be used in combination. As other glycol components, 1,2-cyclohexanedimethanol, 1,3-cyclohexanedimethanol, 1,4-cyclohexanedimethanol, tricyclodecanediol, ethylene oxide adducts and propylene oxide adducts of bisphenol A, ethylene oxide adducts and propylene oxide adducts of hydrogenated bisphenol A, or the like may also be used. Other than these, small amounts of triols and tetraols such as trimethylolethane, trimethylolpropane, glycerin, and pentaerythritol may be contained as necessary.

The lower limit of the glass transition temperature of the polyester resin (A) is preferably 0°C, more preferably 5°C, and particularly preferably 10°C. When the glass transition temperature is set to be 0°C or higher, blocking resistance becomes good.

The upper limit of the glass transition temperature of the polyester resin (A) is preferably 40°C, more preferably 35°C, and particularly preferably 30°C. When the glass transition temperature is set to be 40°C or lower, heat sealing strength can be in the range defined by the claims, and easy-opening property is obtained.

The lower limit of the reduced viscosity ($\eta$sp/c) of the polyester resin (A) is preferably 0.2 dl/g, more preferably 0.4 dl/g, and particularly preferably 0.6 dl/g. When the reduced viscosity is set to be 0.2 dl/g or larger, resin cohesion power is exhibited, and heat sealing strength is exhibited.

The lower limit of the number-average molecular weight (Mn) of the polyester resin (A) is preferably 5000, more preferably 10000, and particularly preferably 15000. When the number-average molecular weight is set to be 5000 or larger, resin cohesion power is exhibited, and heat sealing strength is exhibited.

The lower limit of the glass transition temperature of the polyester resin (B) is preferably 41°C, more preferably 46°C, and particularly preferably 51°C. When the glass transition temperature is set to be 41°C or higher, heat sealing strength can be in the range defined by the claims, and easy-opening property is obtained.

The upper limit of the glass transition temperature of the polyester resin (B) is preferably 80°C, more preferably 75°C, and particularly preferably 60°C. When the glass transition temperature is set to be 80°C or lower, heat sealing strength can be in the range defined by the claims, and easy-opening property is obtained.

The lower limit of the reduced viscosity ($\eta$sp/c) of the polyester resin (B) is preferably 0.1 dl/g, more preferably 0.2 dl/g, and particularly preferably 0.3 dl/g. When the reduced viscosity is set to be 0.1 dl/g or larger, resin cohesion power is exhibited, and heat sealing strength is exhibited.

The lower limit of the number-average molecular weight (Mn) of the polyester resin (B) is preferably 2000, more preferably 5000, and particularly preferably 10000. When the number-average molecular weight is set to be 2000 or larger, resin cohesion power is exhibited, and heat sealing strength is exhibited.

When at least two types of polyester resins having different glass transition temperatures are mixed together, a certain heat sealing strength is obtained in a wide temperature range from 120°C to 180°C, and easy-opening property is exhibited. The mechanism that allows mixing of polyester resins having different glass transition temperatures to lead to exhibition of easy-opening property described above is considered to be due to selective occurrence of cohesive fracture in the antifogging layer during heat sealing strength measurement. In general, it is said that the progress of fracture during heat sealing strength measurement starts from the weakest portion in terms of mechanical strength. In the antifogging layer in the multilayer film of the present invention, it is considered that the polyester resin (B) having a high glass transition temperature causes a high heat sealing strength with the seal surface to be exhibited, and that the polyester resin (A) having a low glass transition temperature causes decrease in the mechanical strength of the antifogging layer, in other words, brittleness of the antifogging layer, to be exhibited. Therefore, in terms of mechanical strength, a high heat sealing strength with the seal surface > brittleness of the antifogging layer is realized, and cohesive fracture selectively occurs in the weakest portion of the antifogging layer in terms of mechanical strength. Therefore, in the present invention, since at least two types of polyester resins having different glass transition temperatures are mixed together, cohesive fracture not dependent on the heat sealing temperatures is caused to selectively occur in the antifogging layer, whereby easy-opening property can be exhibited in a wide temperature range.

The lower limit of the mass ratio of the polyester resin (A) to the polyester resin (B) is preferably the polyester resin (A):the polyester resin (B) = 50:50 mass%, and more preferably 45:55 mass%, and particularly preferably 60:40 mass%. When the mass ratio is set to be 50:50 mass% or higher, the antifogging layer can be made brittle, and the range of the heat sealing strength defined by the claims can be realized in a wide temperature range, and easy-opening property is obtained.

The upper limit of the mass ratio of the polyester resin (A) to the polyester resin (B) is preferably the polyester resin (A):the polyester resin (B) = 90:10 mass%, more preferably 85:15 mass%, and particularly preferably 80:20 mass%. When the mass ratio is set to be 90:10 mass% or lower, sealing strength of the seal surface can be made high, the range of the heat sealing strength defined by the claims can be realized in a wide temperature range, and easy-opening property is obtained.

The antifogging agent (C) is not limited in particular as long as the antifogging agent provides antifogging property. For example, an anionic surfactant, a nonionic surfactant, a cationic surfactant, or an amphoteric surfactant can be used. Among them, a nonionic surfactant is preferably used.

Examples of an anionic surfactant include sulfate ester salts of higher alcohols, higher alkyl sulfonates, higher carboxylates, alkyl benzene sulfonate, polyoxyethylene alkyl sulfate salts, polyoxyethylene alkyl phenyl ether sulfate salts, and vinyl sulfosuccinate salts. Examples of the nonionic surfactant include compounds having a polyoxyethylene structure such as polyoxyethylene alkyl ether, polyoxyethylene alkyl phenyl ether, polyethylene glycol fatty acid ester, ethylene oxide propylene oxide block copolymers, polyoxyethylene fatty acid amides, and ethylene oxide-propylene oxide copolymers, and sorbitan derivatives. Examples of the cationic surfactant include alkylamine salts, dialkylamine salts, trialkylamine salts, alkyl trimethylammonium chloride, dialkyl dimethyl ammonium chloride, and alkyl benzalkonium chloride. Examples of the amphoteric surfactant include lauryl betaine and lauryldimethylamine oxide.

Specific examples of the nonionic surfactant include: sorbitan-based surfactants such as sorbitan monostearate, sorbitan distearate, sorbitan monopalmitate, sorbitan dipalmitate, sorbitan monobehenate, sorbitan dibehenate, sorbitan monolaurate, and sorbitan dilaurate; glycerin-based surfactants such as glycerin monolaurate, glycerin dilaurate, diglycerin monopalmitate, diglycerin dipalmitate, glycerin monostearate, glycerin distearate, diglycerin monostearate, diglycerin distearate, diglycerin monolaurate, and diglycerin dilaurate; polyethylene glycol-based surfactants such as polyethylene glycol monostearate and polyethylene glycol monopalminate; trimethylolpropane-based surfactants such as trimethylolpropane monostearate; diethanolalkylamine-based surfactants and diethanolalkylamide-based surfactants such as lauryl diethanolamine, oleyl diethanolamine, stearyl diethanolamine, lauryl diethanolamide, oleyl diethanolamide, and stearyl diethanolamide; pentaerythritol-based surfactants such as pentaerythritolmonopalmitate; and polyoxyethylene sorbitan monostearate, polyoxyethylene sorbitan distearate, and monostearates and distearates of sorbitan-diglycerin condensates. These can be used individually, or two or more types of these may be used in combination.

Specific examples of the cationic surfactant include amine salts such as lauryl amine acetate, triethanolamine monoformate, and stearamide ethyldiethylamine acetate; and quaternary ammonium salts such as lauryl trimethyl ammonium chloride, stearyl trimethyl ammonium chloride, dilauryl dimethyl ammonium chloride, distearyl dimethyl ammonium chloride, lauryl dimethyl benzyl ammonium chloride, and stearyl dimethyl benzyl ammonium chloride. These may be used individually or two or more types of these may be used in combination.

The lower limit of the Hydrophilic-Lipophilic Balance (hereinafter, abbreviated as HLB) value of the antifogging agent (C) is preferably 3, more preferably 4, and particularly preferably 5. When the HLB is set to be 3 or larger, antifogging property is exhibited.

The upper limit of the HLB value of the antifogging agent (C) is preferably 10, more preferably 9, and particularly preferably 8. When the HLB value is set to be 10 or smaller, excessive deposition of the antifogging agent on the film surface can be prevented, and deterioration of haze and decrease in sealing strength can be prevented.

The lower limit of the content of the antifogging agent (C) in the antifogging layer in terms of solid content concentration is preferably 1.0 mass%, more preferably 1.5 mass%, and particularly preferably 2.0 mass%. When the content is set to be 1.0 mass% or higher, antifogging property is exhibited.

The upper limit of the content of the antifogging agent (C) in the antifogging layer is preferably 10.0 mass%, more preferably 9.5 mass%, and particularly preferably 9.0 mass%. When the content is set to be 10.0 mass% or lower, haze becomes good, and decrease in heat sealing strength due to excessive deposition on the surface of the antifogging agent can be suppressed.

The anti-blocking agent (D) can be contained in the antifogging layer of the present invention. Examples of the anti-blocking agent include inorganic particles, organic particles, and waxes, and the anti-blocking agent can be contained to an extent that heat sealing strength is not decreased. These anti-blocking agents may be used individually or two or more types of these anti-blocking agents may be used in combination. The lower limit of the content of the anti-blocking agent in terms of solid content concentration of the antifogging layer is preferably 0.1 mass% or higher, more preferably 0.3 mass%, and particularly preferably 0.5 mass%. When the content is 0.1 mass% or higher, blocking resistance is

EP 4 458 576 A1

exhibited.

The upper limit of the content of the anti-blocking agent in terms of solid content concentration of the antifogging layer is preferably 5.0 mass% or lower, more preferably 4.5 mass%, and particularly preferably 4.0 mass%. When the content is 5.0 mass% or lower, heat sealing strength is not impaired.

Examples of the inorganic particles include inorganic particles that contain a metal oxide, a hydroxide, a sulfate, a carbonate, a silicate, or the like of magnesium, calcium, barium, zinc, zirconium, molybdenum, silicon, antimony, titanium, or the like. Among these inorganic particles, silica gel particles are particularly preferable. The shape of the particles may be any shape such as a powder shape, a particulate shape, a granular shape, a plate-like shape, or a needle-like shape.

Examples of the organic particles include polymer particles of a polymethyl methacrylate resin, a polystyrene resin, a nylon resin, a melamine resin, a benzoguanamine resin, a phenol resin, a urea resin, a silicon resin, a methacrylate resin, an acrylate resin, or the like; or a cellulose powder, a nitrocellulose powder, a wood powder, a waste paper powder, starch, or the like. The shape of the particles may be any shape such as a powder shape, a particulate shape, a granular shape, a plate-like shape, or a needle-like shape.

Specific examples of the waxes include: hydrocarbon-based waxes such as liquid paraffin, native paraffin, micro wax, synthetic paraffin, and polyethylene wax; fatty acid-based waxes such as stearic acid; fatty acid-based amide waxes such as stearic acid amide, palmitic acid amide, methylenebisstearamide, ethylenebisstearamide, oleamide, and esylic acid amide; ester-based waxes such as a lower alcohol ester of a fatty acid, a polyhydric alcohol ester of a fatty acid, and a fatty acid polyglycol ester; alcohol-based waxes such as cetyl alcohol and stearyl alcohol; olefin-based waxes; natural product waxes such as castor wax and carnauba wax; and metal soaps derived from fatty acids having 12 to 30 carbon atoms.

The antifogging layer is laminated on at least one surface of the base layer. As the lamination method, co-extrusion with a resin composition forming the base layer, dry lamination of the base layer and the antifogging layer, extrusion coating of the antifogging layer onto the base layer, or solvent coating onto the base layer can be adopted. Preferably, the multilayer film of the present invention can be obtained by coating (applying) an organic solvent solution of the resin composition forming the antifogging layer on the base layer and drying the resultant matter.

The lower limit of the thickness of the antifogging layer is preferably 0.3 $\mu$m or larger, more preferably 0.5 $\mu$m or larger, and particularly preferably 0.7 $\mu$m or larger. When the thickness is 0.3 $\mu$m or larger, heat sealability is exhibited.

The upper limit of the thickness of the antifogging layer is preferably smaller than 3.0 $\mu$m, more preferably smaller than 2.8 $\mu$m, and particularly preferably smaller than 2.6 $\mu$m. When the thickness is smaller than 3.0 $\mu$m, blocking resistance becomes good.

[Base layer]

Preferably, the base layer in the multilayer film of the present invention is a biaxially oriented polyester film for the purpose of improving impact resistance of the multilayer film. In a case of an unstretched polyester film, due to the production method thereof, impact resistance may become poor, and due to an external impact or a load caused by stacking of commodities during display, the film may be damaged. Further, in a case of an unstretched polyester film, due to the production method thereof, thickness unevenness is likely to be large, and blocking is likely to occur when the film is made into a roll. The production method of the biaxially oriented polyester film is not limited in particular, and a simultaneous biaxially stretching method or a sequential biaxially stretching method may be adopted. However, an inflation method is not preferable because, due to the production method, thickness unevenness is likely to occur, and blocking is likely to occur when the film is made into a roll.

As a main component of the base layer of the present invention, any polyester may be adopted. However, it is preferable that polyethylene terephthalate is used as a main component. Another polyester may be contained within a range not impairing the present invention. Specific examples thereof include polyester resins such as polybutylene terephthalate, polyethylene naphthalate, polybutylene naphthalate, and polypropylene terephthalate; polyester resins obtained through copolymerization of a dicarboxylic acid such as isophthalic acid, orthophthalic acid, naphthalene dicarboxylic acid, biphenyl dicarboxylic acid, cyclohexane dicarboxylic acid, adipic acid, azelaic acid, or sebacic acid; and polyester resins obtained through copolymerization of a diol component such as ethylene glycol, 1,3-propylene glycol, 1,2-propylene glycol, neopentylglycol, 1,5-pentanediol, 1,6-hexanediol, diethylene glycol, cyclohexane diol, polyethylene glycol, polytetramethylene glycol, or polycarbonate diol.

In order to improve easily slipping property of the multilayer film, for example, an inorganic lubricant such as titanium dioxide, fine particle silica, kaolin, or calcium carbonate, or an organic lubricant such as a long-chain fatty acid ester may be added. A colorant, an antistatic agent, an ultraviolet absorber, and the like may be added as necessary.

The layer configuration of the base layer is not limited in particular, and a single-layer configuration, a two-layer configuration, a three-layer configuration, a four-layer configuration, or a super-multilayer configuration may be adopted. Layers may have different compositions.

8

The method for obtaining the base layer is not limited in particular. However, from the viewpoint of having good thickness accuracy, a T-die method is preferable. In a case of an inflation method, due to the production method, thickness unevenness is likely to occur.

The upper limit of the cooling roll temperature is preferably 40°C and more preferably 20°C or lower. When the cooling roll temperature is 40°C or lower, crystallinity when the melted polyester resin composition is cooled and solidified does not become too high, and thus, stretching becomes easy.

The lower limit of the stretching temperature in the longitudinal direction (also referred to as an MD direction) is preferably 90°C, more preferably 95°C, and particularly preferably 100°C. When the stretching temperature is 90°C or higher, rupture can be suppressed. The upper limit of the stretching temperature in the MD direction is preferably 140°C, more preferably 135°C, and particularly preferably 130°C. When the stretching temperature is 140°C or lower, sufficient orientation can be made, and impact strength of the film after being biaxially oriented improves.

The lower limit of the stretch ratio in the MD direction is preferably 3.0 times, more preferably 3.2 times, and particularly preferably 3.4 times. When the stretch ratio is 3.0 times or larger, thickness unevenness becomes good, and blocking resistance improves. The upper limit of the stretch ratio in the MD direction is preferably 4.0 times, more preferably 3.8 times, and particularly preferably 3.6 times. When the stretch ratio is set to be 4.0 times or smaller, rupture can be suppressed.

The lower limit of the stretching temperature in the width direction (also referred to as a TD direction) is preferably 100°C, more preferably 105°C, and particularly preferably 110°C. When the stretching temperature is 100°C or higher, rupture can be suppressed. The upper limit of the stretching temperature in the TD direction is preferably 140°C, more preferably 135°C, and particularly preferably 130°C. When the stretching temperature is 140°C or lower, sufficient orientation can be made, and impact strength of the film after being biaxially oriented improves.

The lower limit of the stretch ratio in the TD direction is preferably 3.5 times, more preferably 3.6 times, and particularly preferably 3.7 times. When the stretch ratio is 3.5 times or larger, thickness unevenness becomes good, and blocking resistance improves. The upper limit of the stretch ratio in the MD direction is preferably 4.5 times, more preferably 4.4 times, and particularly preferably 4.3 times. When the stretch ratio is set to be 4.5 times or smaller, rupture can be suppressed.

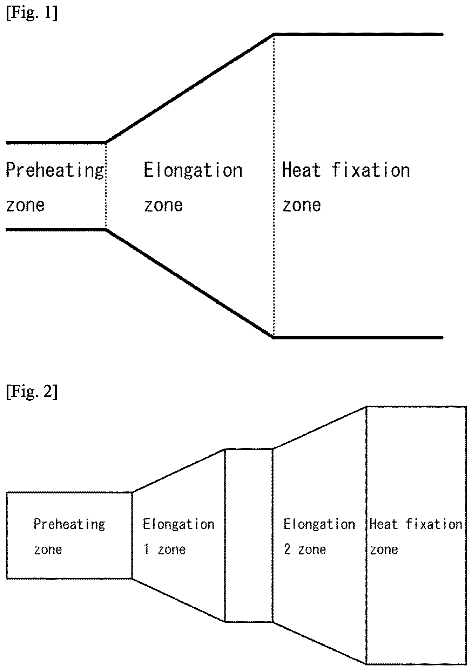

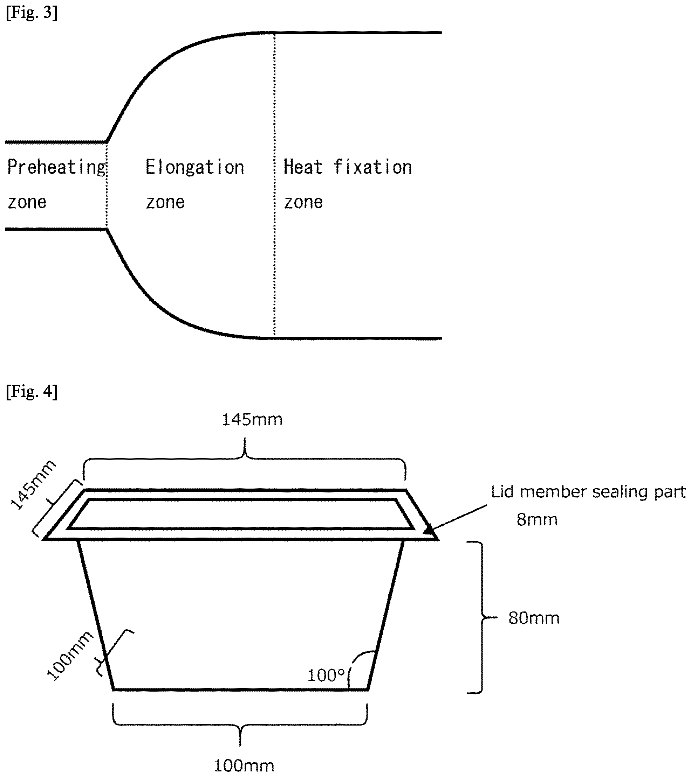

Preferably, the multilayer film of the present invention has good thickness unevenness with impact strength and tear strength balanced. The film forming condition of the base layer contributes to thickness unevenness to a large extent in particular, and the stretching step in the TD direction most influences the thickness unevenness. For example, when the stretch ratio in the TD direction is increased, impact strength improves and thickness unevenness also decreases, but tear strength decreases. In the stretching step in the TD direction, it is preferable that the TD stretch pattern is realized by a multi-stage stretching method as shown in FIG. 2 or by a logarithmic pattern as shown in FIG. 3. In a case of a TD stretch pattern having an ordinary straight shape as shown in FIG. 1, the stretch ratio needs to be decreased in order to make impact strength and tear strength balanced. In that case, thickness unevenness may become large, resulting in deteriorated blocking resistance. Meanwhile, in a case of a TD stretch pattern according to the multi-stage stretching method or having the logarithmic pattern, orientation of the film can be suppressed without decreasing the stretch ratio, therefore, impact strength and tear strength can be balanced while thickness unevenness is maintained, and thus, the TD stretch pattern is preferable.

When multi-stage stretching is performed in the TD direction, it is preferable that the multi-stage stretching is performed in two or more stages and five or less stages. The multi-stage stretching is preferable, since the stretching stress can be changed by changing the stretching temperature of each stage and orientation can be suppressed. As shown in FIG. 2, in the multi-stage stretching, it is preferable to provide such a pattern in which a fixed length is maintained after the end of each stage of stretching. In addition, it is preferable that the temperature pattern is set such that the temperature is decreased from the first stage of stretching to the final stage of stretching with a temperature difference of 2°C or higher between stages of stretching.

The lower limit of the heat setting temperature is preferably 180°C, more preferably 190°C, and particularly preferably 200°C. When the heat setting temperature is 180°C or higher, the heat shrinkage rate can be decreased. The upper limit of the heat setting temperature is preferably 240°C, more preferably 230°C, and particularly preferably 220°C. When the heat setting temperature is 240°C or lower, decrease in impact strength can be prevented.

The lower limit of the relaxation rate is preferably 0.5%, more preferably 1.0%, and particularly preferably 2.0%. When the relaxation rate is 0.5% or higher, the heat shrinkage rate can be kept low. The upper limit of the relaxation rate is preferably 10%, more preferably 8%, and particularly preferably 6%. When the relaxation rate is set to be 10% or lower, sagging or the like can be prevented from occurring, and blocking when the film is made into a roll can be prevented.

The lower limit of the thickness of the base layer of the present invention is preferably 5 μm, more preferably 10 μm, and particularly preferably 15 μm. When the thickness is set to be 5 μm or larger, impact strength and tear strength can be maintained. The upper limit of the thickness of the base layer of the present invention is preferably 100 μm, more preferably 80 μm, and particularly preferably 50 μm. When the thickness is set to be 100 μm or smaller, the

film can be suitably used as a lid member.

[Multilayer film]

Measurement of the water contact angle in the present invention is performed under a condition that the temperature is 5°C and the relative humidity is 50% (50%R.H.). Usually, an A-PET container that packages food such as a salad is often stored and displayed under a refrigeration condition, and at that time, antifogging property is important. Therefore, as a condition for the water contact angle appropriately representing the antifogging property under a refrigeration condition, a 5°C condition is more appropriate than a general room temperature condition.

The upper limit of the water contact angle of the multilayer film of the present invention is preferably 50°, more preferably 40°, and particularly preferably 30°. When the water contact angle is set to be 50° or smaller, even if water vapor scattered from the contents and the like attaches to the multilayer film, water droplets can be expanded to be thin, and fogging does not occur in the appearance.

The lower limit of the water contact angle of the multilayer film of the present invention is preferably 10°, more preferably 15°, and particularly preferably 20°. When the water contact angle is set to be 10° or larger, the antifogging agent can be prevented from being excessively deposited on the surface to decrease heat sealing strength.

The lower limit of the heat sealing strength measured in a case where the multilayer film of the present invention and an unstretched polyethylene terephthalate sheet having a thickness of 200 $\mu$m are heat-sealed at each of temperatures of 120°C, 140°C, 160°C, and 180°C, is preferably 2 N/15 mm, more preferably 3 N/15 mm, and particularly preferably 4 N/15 mm. In a case where the heat sealing strength is set to be 2 N/15 mm or larger, when the film is used as a lid member, sealing is realized with a sufficient strength.

The upper limit of the heat sealing strength measured in a case where the multilayer film of the present invention and an unstretched polyethylene terephthalate sheet of 200 $\mu$m is heat-sealed at each of temperatures of 120°C, 140°C, 160°C, and 180°C, is preferably 12 N/15 mm, more preferably 11 N/15 mm, and particularly preferably 10 N/15 mm. In a case where the heat sealing strength is set to be 12 N/15 mm or smaller, when the film is used as a lid member, too large sealing strength that requires a large force for opening is not caused, and breakage of the multilayer film due to too large sealing strength can be prevented.

A feature of the present invention is that, when the multilayer film is used as a lid member of an A-PET container, cohesive fracture is intentionally caused in the antifogging layer at the time of opening of the lid member, whereby a certain heat sealing strength is obtained in a wide temperature range.

The upper limit of the peel strength measured in a case where the antifogging layer face of the multilayer film of the present invention and the base layer face of the multilayer film are stacked with each other, and then left to stand for one week under a condition of 40°C under a load of 450 kgf/m$^2$, is preferably 1 N/15 mm, more preferably 0.8 N/15 mm, and particularly preferably 0.6 N/15 mm. When the peel strength is set to be 1 N/15 mm or smaller, it is possible to prevent troubles in processing steps in which, in a case of a roll form, films are blocked with each other, thus causing breakage during unwinding, for example. In the present invention, since the antifogging layer includes at least two types of polyester resins having different glass transition temperatures, there is an effect of suppressing blocking phenomenon between the films.

The lower limit of the impact strength of the multilayer film of the present invention is preferably 0.5 J, more preferably 0.6 J, and particularly preferably 0.8 J. When the impact strength is set to be 0.5 J or larger, the multilayer film has a strength capable of sufficiently withstanding external stress during transportation of the container and during display, and breakage or the like of the lid member can be prevented. The upper limit is not limited in particular, but may be 1.5 J or smaller or may be 1.0 J or smaller.

The lower limit of the tear strength of the multilayer film of the present invention is preferably 100 mN, more preferably 110 mN, and particularly preferably 120 mN. When the tear strength is set to be 100 mN or larger, if cohesive fracture in the antifogging layer occurring at the time of opening of the container has propagated in the base layer, breakage together with the base layer can be prevented. Consequently, good opening property is obtained. The upper limit is not limited in particular, but may be 400 mN or smaller or may be 300 mN or smaller.

The lower limit of the strength ratio (tear strength$_{MD}$/tear strength$_{TD}$) of the tear strength in the MD direction of the multilayer film of the present invention to the tear strength in the TD direction thereof is preferably 0.6, more preferably 0.7, and particularly preferably 0.8. When the strength ratio is set to be 0.6 or larger, orientation of the multilayer film can be isotropically suppressed, and easy-opening property is obtained. In general, at the time of opening of the lid member, the manner of opening is slightly different from person to person. Therefore, the manner in which force is applied to the lid member in the horizontal direction and the vertical direction is random. Therefore, when there is large anisotropy, breakage is likely to occur.

The upper limit of the strength ratio (tear strength$_{MD}$/tear strength$_{TD}$) of the tear strength in the MD direction of the multilayer film of the present invention to the tear strength in the TD direction thereof is preferably 1.5, more preferably 1.3, and particularly preferably 1.1. When the strength ratio is set to be 1.5 or smaller, orientation of the multilayer film can be isotropically suppressed, and easy-opening property is obtained.

The lower limit of the orientation coefficient, of the multilayer film of the present invention, obtained by using an Abbe refractometer according to the calculation formula of Formula (1) below is 0.6, more preferably 0.7, and particularly preferably 0.8.

$$\text{Formula (1)} \quad \text{Orientation coefficient} = \{Nx-(Ny+Nz)/2\}/\{Ny-(Nx+Nz)/2\}$$

Nx: refractive index in the MD direction of the film
Ny: refractive index in the TD direction of the film
Nz: refractive index in the thickness direction of the film

When the orientation coefficient is set to be 0.6 or larger, orientation of the multilayer film can be isotropically suppressed, and easy-opening property is obtained.

The upper limit of the orientation coefficient, of the multilayer film of the present invention, obtained by using an Abbe refractometer according to the calculation formula of Formula (1) above is preferably 1.5, more preferably 1.3, and particularly preferably 1.1. When the orientation coefficient is set to be 1.5 or smaller, orientation of the multilayer film can be isotropically suppressed, and easy-opening property is obtained.

The upper limit of the thickness unevenness of the multilayer film of the present invention is preferably 5%, more preferably 4%, and particularly preferably 3%. When the thickness unevenness is set to be 5% or lower, it is possible to prevent troubles in processing steps in which, in a case of a roll form, stress is locally applied to a portion of bad thickness unevenness, thus causing blocking, thereby causing breakage during unwinding.

The upper limit of the haze of the multilayer film of the present invention is preferably 10% or lower, more preferably 8%, and particularly preferably 6%. When the haze is 10% or lower, transparency of the multilayer film used as a lid member is high, and the contents can be sufficiently viewed.

The multilayer film of the present invention is suitably used as a packaging material. In particular, the multilayer film is suitable for a lid member for a food packaging container. When the multilayer film is used as a lid member for a food packaging container, it is preferable that the antifogging layer face of the multilayer film and the container opening edge portion of the food packaging container are tightly sealed in contact with each other. The food packaging container for which the multilayer film of the present invention is used as a lid member is not limited in particular, but is preferably a polyester-based container and particularly preferably an A-PET (amorphous polyethylene terephthalate) container.

<Examples>

Physical property evaluation method

[Thickness of base layer]

As for the thickness of the base layer, the thickness before an antifogging agent was laminated was measured by using the electronic micrometer Millitron 1202D manufactured by Seiko EM.

[Thickness of antifogging layer]

The thickness of the multilayer film (base layer + antifogging layer) was measured by using the electronic micrometer Millitron 1202D manufactured by Seiko EM. Then, the antifogging layer side of the multilayer film was completely wiped off with a solvent in which the antifogging layer was soluble. The thickness of the sample after the wiping off was also measured and the thickness of the antifogging layer was calculated according to Formula (2) below.

Thickness ($\mu$m) of the antifogging layer = thickness ($\mu$m) of the multilayer film - thickness ($\mu$m) of the film after wiping off

[Haze of multilayer film]

In accordance with JIS K7361-1, the multilayer film was cut into a square shape with each side thereof measuring 10 cm, and haze measurement was performed by using the haze meter NDH2000 manufactured by NIPPON DENSHOKU INDUSTRIES Co., Ltd. The haze measurement was performed at six locations, and the average value of the measurement values at the six locations was regarded as an actually measured haze value.

[Heat sealing strength]

An unstretched polyethylene terephthalate sheet having a thickness of 200 μm and the antifogging layer side of the multilayer film were stacked with each other. This sample was adhered by a heat sealer. The heat sealing condition was set as follows. Upper bar temperature: 120°C to 180°C in increments of 20°C; lower bar: 30°C; pressure: 0.2 MPa; and time: one second. The heat seal sample was cut out so as to have a seal width of 15 mm. The heat sealing strength was measured at a tensile speed of 200 mm/minute with the distance between sample chucks being 20 mm by using the tensile tester "AGS-KNX" (manufactured by SHIMADZU CORPORATION). The heat sealing strength is indicated by strength per 15 mm of seal width (N/15 mm).

[Water contact angle]

Under a condition of 5°C and 50%R.H., the water contact angle on the antifogging layer side of the multilayer film was measured by using the contact angle meter "PORTABLE CONTACT ANGLE METER PCA-1 (manufactured by Kyowa Interface Science Co., Ltd.)". The dropping amount of water per measurement was set to 1 μL, and the angle between the antifogging layer and the water droplet was read after five seconds from the dropping. Using a 0/2 method for reading the water contact angle, water contact angle measurement was performed at ten locations per sample, and the average value of the measurement values was defined as the contact angle of the sample.

[Blocking resistance evaluation]

Two evaluation samples each having a size of 15 cm × 15 cm were cut out from the multilayer film of the present invention. The base layer side and the antifogging layer side of these evaluation samples were stacked with each other and then left to stand for one week under a condition of 40°C under a load of 450 kgf/m². Then, the evaluation samples were taken out and were cut out so as to have a width of 15 mm, and the peel strength between the base layer and the antifogging layer was measured. The peel strength was measured at a tensile speed of 200 mm/minute with the distance between sample chucks being 20 mm by using the tensile tester "AGS-KNX" (manufactured by SHIMADZU CORPORATION). The peel strength is indicated by strength per 15 mm (N/15 mm).

[Impact strength]

Using an impact tester (manufactured by Toyo Seiki Seisaku-sho, Ltd.), the strength against impact punching of the multilayer film under a condition of 5°C and 50%R.H. was measured. As an impact sphere, a sphere with a diameter of 1 . 2 inches was used.

[Tear strength]

In accordance with JIS-K7128-2, the tear strength of the multilayer film was measured by using a light load tear tester (manufactured by Toyo Seiki Seisaku-sho, Ltd.). The slit was 12.7 mm.

[Orientation coefficient]

A sample with sides of 5 mm was cut out from the multilayer film. With respect to this sample, according to the JIS K7142-1996 A method, using sodium D line as a light source, and using diiodomethane as a contact liquid, the refractive index (Nx) in the longitudinal direction of the film, the refractive index (Ny) in the width direction of the film, and the refractive index (Nz) in the thickness direction of the film were measured by the Abbe refractometer NAR-1T (manufactured by ATAGO CO., LTD.). The orientation coefficient was calculated according to Formula (1) below.

$$\text{Formula (1)} \quad \text{Orientation coefficient} = \{Nx-(Ny+Nz)/2\}/\{Ny-(Nx+Nz)/2\}$$

[Thickness unevenness]

A long strip-shaped sample measuring 200 mm in length × 40 mm in width in the TD direction and the MD direction was cut out from each of five locations of the multilayer film. Each sample was measured at a speed of 5 m/minute and at an interval of 0.5 mm by using a continuous contact type thickness meter (manufactured by MIKURON.com.). From the standard deviation of the measured thicknesses and the average value of the thicknesses, the thickness unevenness in the TD direction and the thickness unevenness in the MD direction were each calculated as the average value of the five locations according to Formula (3) below. Further, the average value of the thickness unevenness in the MD direction and the thickness unevenness in the TD direction was defined as the thickness unevenness (%) of the multilayer film.

Thickness unevenness (%) = {(standard deviation of thickness)/(average value of thickness)} $\times$ 100

[Antifogging property evaluation]

The multilayer film was cut into a square sample measuring 30 cm $\times$ 30 cm. 300 mL of 50°C hot water was poured into a plastic container (volume: 500 mL, the diameter of the mouth portion: about 10 cm), and the mouth portion of the plastic container was covered by the sample such that the antifogging layer side is on the hot water side, and the resultant matter was used as an evaluation sample. The mouth portion was sealed using a rubber band. This evaluation sample was left to stand for 30 minutes under a condition of 5°C, and then, water droplets attached to the lid member were visually evaluated with criteria below.

Determination A Fogging due to water droplets is less than 1/4 of the entire area of the mouth portion
Determination D Fogging due to water droplets is 1/4 or more of the entire area of the mouth portion

[Easy-opening property]

The antifogging layer side of the multilayer film was overlaid on an A-PET container having the shape and size in FIG. 4, and was adhered to the A-PET container from above the multilayer film by heat sealing. The heat sealing condition was set as follows. Each of temperatures of 120°C, 140°C, 160°C, and 180°C; pressure: 0.2 MPa; and time: one second. Then, ease of peeling when the multilayer film was peeled by hand was evaluated in terms of tactile sensations below.

Determination A Sufficiently adhered and easily peeled by hand
Determination B Insufficiently adhered and peeled without force
Determination C Too strongly adhered and could not be easily peeled by hand
Determination D The film was broken at the time of opening

<Production Example>

(1) Polyester A-1

In an ester reaction vessel, dimethyl terephthalate [55 parts by mass], dimethyl isophthalate [15 parts by mass], dimethyl sebacate [30 parts by mass], ethylene glycol [30 parts by mass], and 2,2-dimethyl-1,3-propanediol [30 parts by mass] were put, and transesterification was carried out over four hours while the temperature was increased to 230°C. After the transesterification ended, while the temperature in the system was increased to 250°C, the system was depressurized to 10 torr over 60 minutes, and polycondensation reaction was carried out at 250°C for 60 minutes. Then, nitrogen was caused to flow in the system to cause vacuum break, whereby the polycondensation reaction was caused to end. After the reaction ended, a polyester resin was taken out and cooled, to obtain a polyester A-1. The glass transition temperature was 7°C.

(2) Polyester A-2

In an ester reaction vessel, dimethyl terephthalate [70 parts by mass], dimethyl sebacate [30 parts by mass], ethylene glycol [30 parts by mass], and propylene glycol [70 parts by mass] were put, and transesterification was carried out over four hours while the temperature was increased to 230°C. After the transesterification ended, while the temperature in the system was increased to 250°C, the system was depressurized to 10 torr over 60 minutes, and polycondensation reaction was carried out at 250°C for 60 minutes. Then, nitrogen was caused to flow in the system to cause vacuum break, whereby the polycondensation reaction was caused to end. After the reaction ended, a polyester resin was taken out and cooled, to obtain a polyester A-2. The glass transition temperature was 16°C.

(3) Polyester A-3

In an ester reaction vessel, dimethyl terephthalate [45 parts by mass], dimethyl isophthalate [39 parts by mass], dimethyl sebacate [16 parts by mass], ethylene glycol [75 parts by mass], and 2,2-dimethyl-1,3-propanediol [25 parts by mass] were put, and transesterification was carried out over four hours while the temperature was increased to 230°C. After the transesterification ended, while the temperature in the system was increased to 250°C, the system was depressurized to 10 torr over 60 minutes, and polycondensation reaction was carried out at 250°C for 60 minutes. Then, nitrogen was caused to flow in the system to cause vacuum break, whereby the polycondensation reaction was caused to end. After the reaction ended, a polyester resin was taken out and cooled, to obtain a polyester A-3. The glass transition temperature was 32°C.

(4) Polyester B-1

In an ester reaction vessel, dimethyl terephthalate [45 parts by mass], dimethyl isophthalate [45 parts by mass], dimethyl sebacate [10 parts by mass], ethylene glycol [50 parts by mass], and propylene glycol [50 parts by mass] were put, and transesterification was carried out over four hours while the temperature was increased to 230°C. After the transesterification ended, while the temperature in the system was increased to 250°C, the system was depressurized to 10 torr over 60 minutes, and polycondensation reaction was carried out at 250°C for 60 minutes. Then, nitrogen was caused to flow in the system to cause vacuum break, whereby the polycondensation reaction was caused to end. After the reaction ended, a polyester resin was taken out and cooled, to obtain a polyester A-3. The glass transition temperature was 47°C.

(5) Polyester B-2

In an ester reaction vessel, dimethyl terephthalate [50 parts by mass], dimethyl isophthalate [50 parts by mass], ethylene glycol [50 parts by mass], and 2,2-dimethyl-1,3-propanediol [50 parts by mass] were put, and transesterification was carried out over four hours while the temperature was increased to 230°C. After the transesterification ended, while the temperature in the system was increased to 250°C, the system was depressurized to 10 torr over 60 minutes, and polycondensation reaction was carried out at 250°C for 60 minutes. Then, nitrogen was caused to flow in the system to cause vacuum break, whereby the polycondensation reaction was caused to end. After the reaction ended, a polyester resin was taken out and cooled, to obtain a polyester B-2. The glass transition temperature was 67°C.

The physical properties of the polyesters A-1, A-2, A-3, B-1, and B-2 are shown in Table 1.

[Table 1]

| | | | | polyester resin | | | | |
|---|---|---|---|---|---|---|---|---|
| | | | unit | A-1 | A-2 | A-3 | B-1 | B-2 |
| composition | polyvalent carboxylic acid component | terephthalic acid | mol% | 55 | 70 | 45 | 45 | 50 |
| | | isophthalic acid | mol% | 15 | - | 39 | 45 | 50 |
| | | sebacic acid | mol% | 30 | 30 | 16 | 10 | - |
| | polyhydric alcohol component | ethylene glycol | mol% | 50 | 30 | 75 | 50 | 50 |
| | | propylene glycol | mol% | - | 70 | - | 50 | - |
| | | 2,2-dimethyl-1,3-propanediol | mol% | 50 | - | 25 | - | 50 |
| physical property | | η sp/c | dl/g | 1.0 | 0.6 | 0.8 | 0.6 | 0.6 |
| | | number-average molecular weight | - | 30000 | 17000 | 32000 | 16000 | 18000 |
| | | Tg | °C | 7 | 16 | 32 | 47 | 67 |

[Example 1]

A PET resin (when the entirety of a resin composition having an intrinsic viscosity of 0.62 dl/g composed of terephthalic acid//ethylene glycol = 100//100 (mol%) was defined as 100 mass%, silica particles corresponding to 0.1 mass% were blended) was put into an extruder. The resin was melted at 280°C in the extruder, and then cast from a T-die at 280°C and adhered to a cooling roll at 20°C through an electrostatic adhesion method, to obtain an unstretched sheet having a single-layer configuration.

Then, the obtained unstretched sheet was stretched 3.5 times in the MD direction at a temperature of 115°C. Then, the sheet was caused to pass through a tenter having a stretch pattern of multi-stage stretching, to be stretched 4.0 times in the TD direction. The multi-stage stretching is three-stage stretching, and the stretching temperature was 115°C in the first stage stretching, was 112°C in the second stage stretching, and was 109°C in the third stage stretching. Between the stretching stages, a pattern having a fixed length was provided. Immediately after the TD stretching, the sheet was, at 220°C, subjected to heat setting treatment for three seconds and 7% relaxation treatment for one second, to obtain a biaxially oriented polyester film having a thickness of 25 μm. This was used as the base layer.

The polyester A-1 [75 mass%], the polyester B-2 [19 mass%], an antifogging agent C-1 (RIKEMAL L-71-D, nonionic surfactant, HLB 7.3, manufactured by RIKEN VITAMIN CO., LTD.) [5 mass%], and an anti-blocking agent D (SYLOID C-812, amorphous silica, manufactured by GRACE) [1 mass%] were heated and stirred in an ethyl acetate solution, to obtain a coating agent (A). Offline coating was carried out such that this coating agent had a thickness of 2 μm on the base layer. This layer was used as the antifogging layer.

[Example 2]

A multilayer film was obtained in the same manner as in Example 1 except that the TD stretch pattern of the biaxially oriented polyester film as the base layer was changed to a logarithmic pattern.

[Example 3]

A multilayer film was obtained in the same manner as in Example 1 except that the thickness of the antifogging layer was changed to 0.3 μm.

[Example 4]

A multilayer film was obtained in the same manner as in Example 1 except that the thickness of the antifogging layer was changed to 2.9 μm.

[Examples 5 to 9]

A multilayer film was obtained in the same manner as in Example 1 except that the coating agent composition of the antifogging layer was changed.

Table 2 shows compositions of a coating agent (B) to a coating agent (L) used in Examples 5 to 9 and Comparative Examples 6 to 11 described later.

As an antifogging agent C-2, a nonionic surfactant (NOIGEN ES-149D, HLB 11·5, manufactured by DKS Co. Ltd.) was used.

[Table 2A]

| | | | coating agent (A) | coating agent (B) | coating agent (C) | coating agent (D) | coating agent (E) | coating agent (F) |
|---|---|---|---|---|---|---|---|---|
| solid content concentration (mass%) | polyester resin A | A-1 (Tg 7°C) | 75 | 47 | 85 | - | - | 75 |
| | | A-2 (Tg 16°C) | - | - | - | 75 | - | - |
| | | A-3 (Tg 32°C) | - | - | - | - | 75 | - |
| | polyester resin B | B-1 (Tg 47°C) | - | - | - | - | - | 18 |
| | | B-2 (Tg 67°C) | 19 | 47 | 9 | 18 | 18 | - |
| | antifogging agent C | C-1 (HLB 7.3) | 5 | 5 | 5 | 5 | 5 | 5 |
| | | C-2 (HLB 11.5) | - | - | - | - | - | - |
| | anti-blocking agent D | | 1 | 1 | 1 | 1 | 1 | 1 |
| composition ratio | polyester resin | A / B | 80 / 20 | 50 / 50 | 90 / 10 | 80 / 20 | 80 / 20 | 80 / 20 |

[Table 2B]

| | | | coating agent (G) | coating agent (H) | coating agent (I) | coating agent (J) | coating agent (K) | coating agent (L) |
|---|---|---|---|---|---|---|---|---|
| solid content concentration (mass%) | polyester resin A | A-1 (Tg 7°C) | 40 | 90 | - | 75 | 80 | 94 |
| | | A-2 (Tg 16°C) | | | | | | |
| | | A-3 (Tg 32°C) | - | - | - | - | - | - |
| | polyester resin B | B-1 (Tg 47°C) | - | - | 75 | - | - | - |
| | | B-2 (Tg 57°C) | 54 | 4 | 18 | 18 | 19 | - |
| | antifogging agent C | (-1 (HLB 7.3) | 5 | 5 | 5 | - | - | 5 |
| | | C-2 (HLB 11.5) | - | - | - | 5 | - | - |
| | anti-blocking agent D | | 1 | 1 | 1 | 1 | 1 | 1 |

(continued)

| composition ratio | polyester resin | A / B | coating agent (G) | coating agent (H) | coating agent (I) | coating agent (J) | coating agent (K) | coating agent (L) |
|---|---|---|---|---|---|---|---|---|
| | | | 43 / 57 | 96 / 4 | 0 / 100 | 80 / 20 | 80 / 19 | 100 / 0 |

Table 3 shows physical properties and various evaluation results of the multilayer films obtained in Examples.

[Table 3A]

| | | | unit | Example 1 | Example 2 | Example 3 | Example 4 | Example 5 |
|---|---|---|---|---|---|---|---|---|
| composition of the multilayer film | base layer | thickness | μm | 25 | 25 | 25 | 25 | 25 |
| | stretch ratio | MD / TD | times | 3.5 / 4.0 | 3.5 / 4.0 | 3.5 / 4.0 | 3.5 / 4.0 | 3.5 / 4.0 |
| | stretching method in the TD direction | | - | multi-stage stretching | logarithmic pattern | multi-stage stretching | multi-stage stretching | multi-stage stretching |
| | stretching temperature in the TD direction | first stage stretching | °C | 115 | | 115 | 115 | 115 |
| | | second stage stretching | | 112 | 115 | 112 | 112 | 112 |
| | | third stage stretching | | 109 | | 109 | 109 | 109 |
| | antifogging layer | coating agent | - | (A) | (A) | (A) | (A) | (B) |
| | | thickness | μm | 2.0 | 2.0 | 0.3 | 2.9 | 2.0 |
| physical property of the multilayer film | haze | | % | 4.1 | 4.2 | 2.2 | 7.1 | 4.5 |
| | heat sealing strength | 120°C | N/15mm | 4.6 | 4.4 | 2.2 | 6.6 | 10.8 |
| | | 140°C | | 4.1 | 4.0 | 2.2 | 6.4 | 11.2 |
| | | 160°C | | 4.3 | 4.2 | 2.1 | 6.5 | 11.5 |
| | | 180°C | | 4.5 | 4.3 | 2.6 | 5.9 | 11.2 |
| | water contact angle | | degree | 20 | 21 | 20 | 21 | 25 |
| | peel strength | | N/15mm | 0.4 | 0.3 | 0.1 | 0.9 | 0 |
| | impact strength | | 1 | 0.64 | 0.66 | 0.71 | 0.65 | 0.66 |
| | tear strength | MD | mN | 235 | 222 | 233 | 235 | 223 |
| | | TD | | 162 | 155 | 162 | 164 | 166 |
| | | MD/TD | - | 1.45 | 1.43 | 1.44 | 1.43 | 1.34 |
| | orientation coefficient | | - | 0.72 | 0.71 | 0.72 | 0.79 | 0.75 |
| | thickness unevenness | | % | 3.0 | 3.1 | 2.1 | 4.4 | 2.9 |
| antifogging property evaluation | | | - | A | A | A | A | A |

(continued)

|  |  | unit | Example 1 | Example 2 | Example 3 | Example 4 | Example 5 |
|---|---|---|---|---|---|---|---|
| easy-opening property evaluation | 120°C | - | A | A | A | A | A |
|  | 140°C | - | A | A | A | A | A |
|  | 160°C | - | A | A | A | A | A |
|  | 180°C | - | A | A | A | A | A |

[Table 3B]

| | | | unit | Example 6 | Example 7 | Example 8 | Example 9 |
|---|---|---|---|---|---|---|---|
| composition of the multilayer film | base layer | thickness | μm | 25 | 25 | 25 | 25 |
| | stretch ratio | MD / TD | times | 3.5 / 4.0 | 3.5 / 4.0 | 3.5 / 4.0 | 3.5/4.0 |
| | stretching method in the TD direction | | - | multi-stage stretching | multi-stage stretching | multi-stage stretching | multi-stage stretching |
| | stretching temperature in the TD direction | first stage stretching | °C | 115 | 115 | 115 | 115 |
| | | second stage stretching | | 112 | 112 | 112 | 112 |
| | | third stage stretching | | 109 | 109 | 109 | 109 |
| | antifogging layer | coating agent | - | (C) | (D) | (E) | (F) |
| | | thickness | μm | 2.0 | 2.0 | 2.0 | 2.0 |
| physical property of the multilayer film | haze | | % | 3.9 | 4.1 | 4.3 | 4.4 |
| | heat sealing strength | 120°C | N/15mm | 2.2 | 6.6 | 8.1 | 3.3 |
| | | 140°C | | 2.4 | 6.9 | 7.9 | 3.5 |
| | | 160°C | | 3.1 | 7.1 | 8.8 | 4.1 |
| | | 180°C | | 2.8 | 6.8 | 8.5 | 3.9 |
| | water contact angle | | degree | 22 | 27 | 24 | 20 |
| | peel strength | | N/15mm | 0.8 | 0.2 | 0 | 0.7 |
| | impact strength | | J | 0.71 | 0.62 | 0.65 | 0.71 |
| | tear strength | MD | mN | 222 | 231 | 233 | 238 |
| | | TD | | 164 | 158 | 159 | 166 |
| | | MD/TD | - | 1.35 | 1.46 | 1.47 | 1.43 |
| | orientation coefficient | | - | 0.71 | 0.72 | 0.71 | 0.69 |
| | thickness unevenness | | % | 3.5 | 2.8 | 3.0 | 3.3 |
| antifogging property evaluation | | | - | A | A | A | A |

(continued)

| | | unit | Example 6 | Example 7 | Example 8 | Example 9 |
|---|---|---|---|---|---|---|
| easy-opening property evaluation | 120"C | - | A | A | A | A |
| | 140°C | - | A | A | A | A |
| | 160°C | - | A | A | A | A |
| | 180°C | - | A | A | A | A |

[Comparative Example 1]

A multilayer film was obtained in the same manner as in Example 1 except that the TD stretch pattern of the biaxially oriented polyester film as the base layer was changed to a straight shape. In the obtained multilayer film, the tear strength in the TD direction was low and breakage of the film occurred at the time of evaluation of easy-opening property. Thus, the multilayer film was defective.

[Comparative Example 2]

A multilayer film was obtained in the same manner as in Example 1 except that the TD stretch pattern of the biaxially oriented polyester film as the base layer was changed to a straight shape, and the TD stretch ratio was changed to 3.5 times. The obtained multilayer film was poor in blocking resistance and impact strength.

[Comparative Example 3]

A multilayer film was obtained in the same manner as in Example 1 except that the TD stretch pattern of the biaxially oriented polyester film as the base layer was changed to a straight shape, and the MD stretch ratio was changed to 4.0 times and the TD stretch ratio was changed to 3.5 times. The obtained multilayer film was poor in blocking resistance.

[Comparative Example 4]

A multilayer film was obtained in the same manner as in Example 1 except that the thickness of the antifogging layer was changed to 0.2 $\mu$m. In the obtained multilayer film, water contact angle was large, antifogging property was poor, and in addition, heat sealing strength was low, and heat sealing could not be realized at the time of evaluation of easy-opening property. The multilayer film was defective.

[Comparative Example 5]

A multilayer film was obtained in the same manner as in Example 1 except that the thickness of the antifogging layer was changed to 3.2 $\mu$m. The obtained multilayer film was poor in blocking resistance.

[Comparative Example 6]

A multilayer film was obtained in the same manner as in Example 1 except that the coating agent composition of the antifogging layer was changed. In the obtained multilayer film, heat sealing strength was large, and opening was difficult at the time of evaluation of easy-opening property. The multilayer film was defective.

[Comparative Example 7]

A multilayer film was obtained in the same manner as in Example 1 except that the coating agent composition of the antifogging layer was changed. In the obtained multilayer film, blocking resistance was poor, and in addition, heat sealing strength was low, and heat sealing could not be realized at the time of evaluation of easy-opening property. The multilayer film was defective.

[Comparative Example 8]

A multilayer film was obtained in the same manner as in Example 1 except that the coating agent composition of the antifogging layer was changed. In the obtained multilayer film, heat sealing strength was large, and opening was difficult at the time of evaluation of easy-opening property. The multilayer film was defective.

[Comparative Example 9]

A multilayer film was obtained in the same manner as in Example 1 except that the coating agent composition of the antifogging layer was changed. In the obtained multilayer film, heat sealing strength was low, and heat sealing could not be realized at the time of evaluation of easy-opening property. The multilayer film was defective.

[Comparative Example 10]

A multilayer film was obtained in the same manner as in Example 1 except that the coating agent composition of the antifogging layer was changed. In the obtained multilayer film, water contact angle was large, and antifogging property was poor.

[Comparative Example 11]

A multilayer film was obtained in the same manner as in Example 1 except that the coating agent composition of the antifogging layer was changed. In the obtained multilayer film, blocking resistance was poor, and in addition, heat sealing strength was low, and heat sealing could not be realized at the time of evaluation of easy-opening property. The multilayer film was defective.

Table 4 shows physical properties and various evaluation results of the multilayer films obtained in Comparative Examples.

[Table 4A]

| | | | unit | Comparative Example 1 | Comparative Example 2 | Comparative Example 3 | Comparative Example 4 | Comparative Example 5 | Comparative Example 6 |
|---|---|---|---|---|---|---|---|---|---|
| composition of the multilayer film | base layer | thickness | μm | 25 | 25 | 25 | 25 | 25 | 25 |
| | stretch ratio | MD/TD | times | 3.5 / 4.0 | 3.5 / 4.0 | 3.5 / 4.0 | 3.5 / 4.0 | 3.5 / 4.0 | 3.5 / 4.0 |
| | stretching method in the TD direction | | - | straight shape | straight shape | straight shape | multi-stage stretching | multi-stage stretching | multi-stage stretching |
| | stretching temperature in the TD direction | first stage stretching | °C | 115 | 115 | 115 | 115 | 115 | 115 |
| | | second stage stretching | | | | | 112 | 112 | 112 |
| | | third stage stretching | | | | | 109 | 109 | 109 |
| | antifogging layer | coating agent | - | (A) | (A) | (A) | (A) | (A) | (G) |
| | | thickness | μm | 2.0 | 2.0 | 2.0 | 0.2 | 3.2 | 2.0 |

EP 4 458 576 A1

| | | | unit | Comparative Example 1 | Comparative Example 2 | Comparative Example 3 | Comparative Example 4 | Comparative Example 5 | Comparative Example 6 |
|---|---|---|---|---|---|---|---|---|---|
| physical property of the multilayer film | haze | | % | 4.1 | 5.5 | 5.1 | 2.0 | 7.5 | 4.4 |
| | heat sealing strength | 120°C | N/15mm | 4.1 | 4.3 | 4.4 | 1.9 | 7.7 | 12.2 |
| | | 140°C | | 4.5 | 4.0 | 4.3 | 1.8 | 7.5 | 12.5 |
| | | 160°C | | 4.5 | 4.8 | 5.1 | 1.1 | 7.6 | 12.4 |
| | | 180°C | | 4.4 | 4.9 | 4.4 | 1.5 | 7.6 | 13.0 |
| | water contact angle | | degree | 19 | 19 | 22 | 52 | 22 | 23 |
| | peel strength | | N/15mm | 0 | 1.5 | 1.1 | 0 | 1.2 | 0 |
| | impact strength | | J | 0.70 | 0.44 | 0.56 | 0.61 | 0.71 | 0.61 |
| | tear strength | MD | mN | 200 | 222 | 120 | 222 | 223 | 245 |
| | | TD | | 95 | 150 | 190 | 149 | 155 | 165 |
| | | MD/TD | - | 2.11 | 1.48 | 0.63 | 1.49 | 1.44 | 1.48 |
| | orientation coefficient | | - | 0.51 | 0.99 | 1.22 | 0.75 | 0.78 | 0.81 |
| | thickness unevenness | | % | 2.2 | 6.3 | 5.8 | 2.1 | 5.1 | 2.8 |
| antifogging property evaluation | | | - | A | A | A | D | A | A |
| easy-opening property evaluation | | 120°C | - | D | A | A | B | A | C |
| | | 140°C | - | D | A | A | 8 | A | C |
| | | 160°C | - | D | A | A | B | A | C |
| | | 180°C | - | D | A | A | B | A | C |

EP 4 458 576 A1

[Table 4B]

| | | | unit | Comparative Example 7 | Comparative Example 8 | Comparative Example 9 | Comparative Example 10 | Comparative Example 11 |
|---|---|---|---|---|---|---|---|---|
| composition of the multilayer film | base layer | thickness | μm | 25 | 25 | 25 | 25 | 25 |
| | stretch ratio | MD / TD | times | 3.5 / 4.0 | 3.5 / 4.0 | 3.5/4.0 | 3.5 / 4.0 | 3.5 / 4.0 |
| | stretching method in the TD direction | | - | multi-stage stretching | multi-stage stretching | multi-stage stretching | multi-stage stretching | multi-stage stretching |
| | stretching temperature in the TD direction | first stage stretching | °C | 115 | 115 | 115 | 115 | 115 |
| | | second stage stretching | | 112 | 112 | 112 | 112 | 112 |
| | | third stage stretching | | 109 | 109 | 109 | 109 | 109 |
| | antifogging layer | coating agent | - | (H) | (1) | (J) | (K) | (L) |
| | | thickness | μm | 2.0 | 2.0 | 2.0 | 2.0 | 2.0 |
| physical property of the multilayer film | haze | | % | 3.9 | 4.4 | 10.3 | 3.1 | 3.5 |
| | heat sealing strength | 120°C | N/ 15mm | 1.5 | 11.9 | 1.2 | 4.5 | 1.1 |
| | | 140°C | | 1.4 | 12.2 | 1.2 | 5.1 | 1.5 |
| | | 160°C | | 1.5 | 12.4 | 1.1 | 5.3 | 1.7 |
| | | 180°C | | 1.3 | 12.5 | 0.9 | 5.3 | 1.4 |
| | water contact angle | | degree | 25 | 25 | 8 | 53 | 23 |
| | peel strength | | N/ 15mm | 1.1 | 0 | 0.3 | 0.6 | 1.8 |
| | impact strength | | J | 0.77 | 0.63 | 0.65 | 0.66 | 0.73 |
| | tear strength | MD | mN | 234 | 224 | 233 | 243 | 237 |
| | | TD | | 157 | 151 | 167 | 167 | 167 |
| | | MD/TD | - | 1.49 | 1.48 | 1.40 | 1.46 | 1.42 |
| | orientation coefficient | | - | 0.77 | 0.71 | 0.72 | 0.78 | 0.71 |
| | thickness unevenness | | % | 4.3 | 3.1 | 2.9 | 3.3 | 4.3 |
| antifogging property evaluation | | | - | A | A | A | D | A |
| easy-opening property evaluation | 120°C | | - | B | A | B | A | B |
| | 140°C | | - | B | C | B | A | B |
| | 160°C | | - | B | C | B | A | B |
| | 180°C | | - | B | C | B | A | B |

## Claims

1. A multilayer film comprising at least two layers being a base layer and an antifogging layer, wherein

(a) a heat sealing strength measured by using a test piece having a width of 15 mm when heat sealing of an antifogging layer face of the multilayer film and an unstretched polyethylene terephthalate sheet having a thickness of 200 μm is performed at 0.2 MPa for one second at each of temperatures of 120°C, 140°C, 160°C, and 180°C, is 2.0 N/15 mm or larger and 12.0 N/15 mm or smaller,

(b) a water contact angle measured after five seconds from dropping of 1 μL of distilled water onto a surface of the antifogging layer of the multilayer film under a condition of 5°C and 50%R.H. is 50° or smaller,

(c) a peel strength measured by using a test piece having a width of 15 mm after an antifogging layer face of the multilayer film and a base layer face of the multilayer film are stacked with each other and then left to stand for one week under a condition of 40°C under a load of 450 kgf/m$^2$, is 1 N/15 mm or smaller,

(d) an impact strength under a condition of 5°C in a pendulum impact test is 0.5 J or larger,

(e) a tear strength under a condition of 5°C is 100 mN or larger in each of an MD direction and a TD direction of the multilayer film, and

(f) a thickness of the antifogging layer is 0.3 μm or larger and smaller than 3.0 μm.

2. The multilayer film according to claim 1, wherein a strength ratio (tear strength$_{MD}$/tear strength$_{TD}$) of a tear strength in the MD direction of the multilayer film to a tear strength in the TD direction of the multilayer film, each tear strength being measured under a condition of 5°C, is 0.6 to 1.5.

3. The multilayer film according to claim 1 or 2, wherein
an orientation coefficient of the multilayer film obtained according to a calculation formula of Formula (1) by using an Abbe refractometer is 0.6 to 1.5.

$$\text{Formula (1)} \quad \text{Orientation coefficient} = \{Nx-(Ny+Nz)/2\}/\{Ny-(Nx+Nz)/2\}$$

Nx: refractive index in the MD direction of the film
Ny: refractive index in the TD direction of the film
Nz: refractive index in a thickness direction of the film

4. The multilayer film according to any one of claims 1 to 3, wherein the base layer is a biaxially oriented polyester film.

5. The multilayer film according to any one of claims 1 to 4, wherein the antifogging layer includes at least two types of resins being a polyester resin (A) having a glass transition temperature Tg of 0°C or higher and 40°C or lower, and a polyester resin (B) having a glass transition temperature Tg of 41°C or higher and 80°C or lower.

6. The multilayer film according to claim 5, wherein, in the resins forming the antifogging layer, a mass ratio between the polyester resin (A) and the polyester resin (B) is the polyester resin (A):the polyester resin (B) = 50/50 to 90/10.

7. The multilayer film according to claim 5 or 6, wherein the antifogging layer includes a nonionic surfactant.

8. The multilayer film according to claim 7, wherein an HLB value of the nonionic surfactant is 3 or larger and 10 or smaller.

9. The multilayer film according to any one of claims 1 to 8, wherein thickness unevenness of the multilayer film is 5% or lower.

10. The multilayer film according to any one of claims 1 to 9, wherein haze of the multilayer film is lower than 10%.

11. The multilayer film according to any one of claims 1 to 10, comprising the adhesion layer, the base layer, and a print layer.

12. A lid member for a food packaging container, the lid member including the multilayer film according to any one of claims 1 to 11.

13. A food packaging container comprising the lid member according to claim 12.

[Fig. 1]

| Preheating zone | Elongation zone | Heat fixation zone |

[Fig. 2]

| Preheating zone | Elongation 1 zone | | Elongation 2 zone | Heat fixation zone |

[Fig. 3]

Preheating zone | Elongation zone | Heat fixation zone

[Fig. 4]

145mm

145mm

Lid member sealing part
8mm

80mm

100mm

100°

100mm

## INTERNATIONAL SEARCH REPORT

| International application No. |
|---|
| **PCT/JP2022/046836** |

**A. CLASSIFICATION OF SUBJECT MATTER**

**_B32B 27/00_**(2006.01)i; **_B32B 27/18_**(2006.01)i; **_B32B 27/36_**(2006.01)i; **_B65D 65/40_**(2006.01)i
FI: B32B27/00 B; B32B27/18 C; B32B27/36; B65D65/40 D

According to International Patent Classification (IPC) or to both national classification and IPC

**B. FIELDS SEARCHED**

Minimum documentation searched (classification system followed by classification symbols)

B32B1/00-43/00; B65D65/40; B65D77/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 7-96585 A (DAINIPPON PRINTING CO LTD) 11 April 1995 (1995-04-11)<br>claims, paragraphs [0011]-[0014], [0024]-[0028], [0037] | 1-13 |
| A | JP 2002-275362 A (TOYO BOSEKI) 25 September 2002 (2002-09-25)<br>claims, paragraphs [0005], [0009], [0019], [0022]-[0024] | 1-13 |
| A | JP 2017-209996 A (MITSUBISHI POLYESTER FILM GMBH) 30 November 2017 (2017-11-30)<br>claims, paragraphs [0019], [0029]-[0030], [0091]-[0092] | 1-13 |
| A | WO 2018/179689 A1 (TOYOBO CO., LTD.) 04 October 2018 (2018-10-04)<br>claims, paragraphs [0014], [0046], [0053]-[0054], tables 1, 2 | 1-13 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 February 2023** | **07 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/046836**

| Patent document cited in search report | | | Publication date (day/month/year) | Patent family member(s) | Publication date (day/month/year) |
|---|---|---|---|---|---|
| JP | 7-96585 | A | 11 April 1995 | (Family: none) | |
| JP | 2002-275362 | A | 25 September 2002 | (Family: none) | |
| JP | 2017-209996 | A | 30 November 2017 | US 2017/0341355 A1 claims, paragraphs [0012]-[0013], [0026], [0107]-[0108] EP 3248777 A1 KR 10-2017-0134236 A | |
| WO | 2018/179689 | A1 | 04 October 2018 | US 2020/0063006 A1 claims, paragraphs [0020], [0052], [0059]-[0060], tables 1, 2 EP 3561019 A1 CN 110461983 A KR 10-2019-0127675 A TW 201840795 A | |

Form PCT/ISA/210 (patent family annex) (January 2015)

**EP 4 458 576 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008179689 A
- JP 2018114992 A
- JP 2017209996 A